# EUROPÄISCHE PATENTSCHRIFT

(11) **EP 0 935 741 B1**
(45) Veröffentlichungstag und Bekanntmachung des Hinweises auf die Patenterteilung: **23.07.2003**
(21) Anmeldenummer: 97949856.5
(22) Anmeldetag: 28.10.1997
(51) Int. Cl.: G01H 11/06

(54) **ULTRASCHALLWANDLER IN OBERFLÄCHEN-MIKROMECHANIK MIT INTEGRIERTER ANSTEUERSCHALTUNG, SOWIE ARRAY**
SURFACE MICRO-MECHANIC ULTRASONIC TRANSDUCER WITH INTEGRATED CONTROL CIRCUIT, AND ARRAY
TRANSDUCTEUR A ULTRASONS REALISE SELON UNE TECHNIQUE DE MICRO-USINAGE DE SURFACE AVEC CIRCUIT DE CONTROLE INTEGRE, ET MATRICE

(30) Priorität: 30.10.1996 DE 19643893
(43) Veröffentlichungstag der Anmeldung: 18.08.1999
(73) Patentinhaber: Infineon Technologies AG, 81669 München (DE)
(72) Erfinder: ECCARDT, Peter-Christian, D-85521 Ottobrunn (DE); NIEDERER, Kurt, D-84307 Eggenfelden (DE); SCHEITER, Thomas, D-82041 Oberhaching (DE); VOSSIEK, Martin, D-80789 München (DE); KÖLPIN, Thomas, D-92224 Amberg (DE)
(74) Vertreter: Epping Hermann & Fischer
(86) Internationale Anmeldenummer: DE9702505
(87) Internationale Veröffentlichungsnummer: WO98019140

(56) Entgegenhaltungen:
- EP-A- 0 102 069
- DE-A- 4 318 466
- US-A- 4 699 009
- US-A- 4 873 871
- LADABAUM I ET AL: "Micromachined ultrasonic transducers (MUTs)" 1995 IEEE ULTRASONICS SYMPOSIUM. PROCEEDINGS. AN INTERNATIONAL SYMPOSIUM (CAT. NO.95CH35844), 1995 IEEE ULTRASONICS SYMPOSIUM. PROCEEDINGS. AN INTERNATIONAL SYMPOSIUM, SEATTLE, WA, USA, 7-10 NOV. 1995, ISBN 0-7803-2940-6, 1995, NEW YORK, NY, USA, IEEE, USA, Seiten 501-504 vol.1, XP002063789 in der Anmeldung erwähnt
- KUEHNEL W: "SILICON CONDENSER MICROPHONE WITH INTEGRATED FIELD-EFFECT TRANSISTOR" SENSORS AND ACTUATORS A, Bd. A26, Nr. 1 / 03, 1.März 1991, Seiten 521-525, XP000246508

## Beschreibung

Die vorliegende Erfindung betrifft einen Ultraschallwandler, der mit den Mitteln der Oberflächen-Mikromechanik (surface micromachining) hergestellt ist. Sie betrifft auch eine Anordnung mehrerer derartiger Ultraschallwandler.

In der Veröffentlichung von I. Ladabaum e.a.: "Micromachined Ultrasonic Transducers (MUTs)" in 1995 IEEE Ultrasonics Symposium, Seiten 501 bis 504, ist ein Ultraschallwandler beschrieben, der mit Methoden der Oberflächen-Mikromechanik hergestellt wurde. Abstrahlende Membranen werden auf einem Siliziumsubstrat durch Ausätzen von 1 µm dicken Oxidschichten hergestellt.

Aufgabe der vorliegenden Erfindung ist es, einen verbesserten und für weitergehende Integration brauchbaren Ultraschallwandler anzugeben.

Diese Aufgabe wird mit dem Ultraschallwandler mit den Merkmalen des Anspruches 1 gelöst. Weitere Ausgestaltungen ergeben sich aus den abhängigen Ansprüchen. Die Anordnung ist im Anspruch 11 angegeben.

Der erfindungsgemäße Ultraschallwandler verwendet die Methoden der Oberflächen-Mikromechanik, wie sie im Rahmen eines VLSI-Prozesses, insbesondere eines CMOS-Prozesses verwendet werden, um mikromechanische Komponenten zusammen mit Ansteuerelektronik auf einem Chip zu integrieren. Als Membran des Ultraschallwandlers wird eine dünne Schicht, die vorzugsweise Polysilizium ist, aber z. B. zumindest in Schichtanteilen auch Siliziumnitrid sein kann, verwendet. Diese Schicht wird auf einer Hilfsschicht hergestellt, so daß durch Ausätzen der Hilfsschicht ein geringer Zwischenraum zwischen der Membran und dem Substrat hergestellt werden kann. Die Anregung der Ultraschallschwingungen erfolgt elektrostatisch, indem die Membran elektrisch leitend hergestellt wird (durch Dotieren des Polysiliziums oder durch Aufbringen einer leitfähigen Schicht) und im Substrat ein elektrisch leitender Bereich durch Dotieren ausgebildet wird. Prinzipiell können die bisher für Ultraschallwandler eingesetzten elektronischen Schaltungen auch hier verwendet werden. Die mikromechanischen Wandler haben den Vorteil, daß sie mit den elektronischen Ansteuerkomponenten auf demselben Substrat integriert werden können. Hierdurch ergeben sich neue Anwendungsmöglichkeiten, die im Gegensatz zu bisherigen, nicht integrierten Lösungen kostengünstig und schaltungstechnisch zuverlässig zu realisieren sind. Eine bevorzugte Ausführungsform sieht zusätzliche Schutzmaßnahmen vor, die die Betriebsschaltung des Wandlers von einer Ansteuer- oder Auswerteschaltung soweit entkoppeln, daß die empfindlicheren Bauelemente gegen Überspannungen geschützt sind. Alternative Ausführungsformen sehen zusätzliche Maßnahmen vor, mit denen die Leitfähigkeit oder Steifigkeit der Membran angepaßt werden. Besonders gut geeignet ist der erfindungsgemäße Wandler als Array, d. h. als rasterförmige Anordnung einer Vielzahl von Einzelwandlern, die bei Bedarf einzeln oder in Gruppen angesteuert werden können. Die weitgehende Integration des erfindungsgemäßen Ultraschallwandlers ermöglicht es, ein solches Array auf vergleichsweise einfache Art an elektronische Schaltungen anzuschließen. Wegen der mikromechanischen Ausführung des Wandlers selbst kann der Wandler in einer Vielzahl von Ausführungsformen bereitgestellt werden, insbesondere in weitgehend miniaturisierter Abmessung. Durch die Integration der erforderlichen Ansteuer- und Auswerteschaltungen auf dem Substrat werden Einflüsse äußerer Störungen minimiert; eine komplizierte elektrische Verdrahtung entfällt; eine sensorspezifische Signalverarbeitung auf dem Chip ist möglich, was die Ansteuerung von außen weiter vereinfacht; und die Wandler sind in großer Stückzahl kostengünstig und mit geringen Fertigungstoleranzen herstellbar.

Es folgt eine genauere Beschreibung der Erfindung anhand der Figuren 1 bis 6.
- Figur 1: zeigt einen erfindungsgemäßen Wandler mit elektronischen Komponenten integriert im Querschnitt.
- Figur 2: zeigt eine alternative Ausgestaltung der mikromechanischen Komponente.
- Figur 3: zeigt das Schema einer Anordnung mehrerer Wandler im Querschnitt.
- Figur 4: zeigt das Raster eines Wandler-Arrays in Aufsicht.
- Figur 5: zeigt die mikromechanische Komponente im Querschnitt zusammen mit dem Schaltbild für Sendebetrieb.
- Figur 6: wie vor für Empfangsbetrieb.

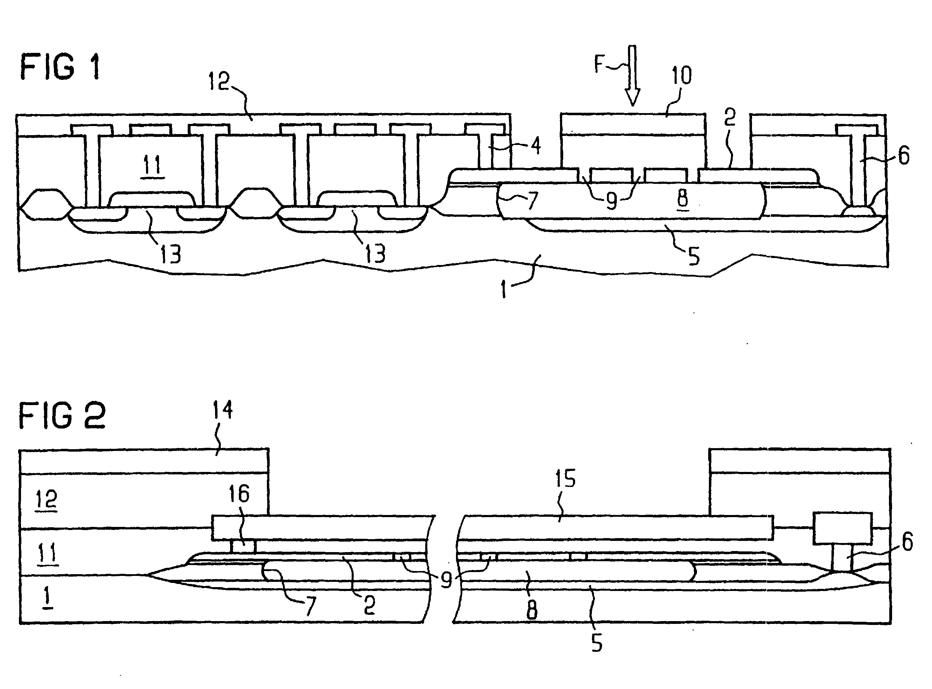

In Figur 1 ist der Aufbau eines erfindungsgemäßen Wandlers im Querschnitt dargestellt. In einem Substrat 1, vorzugsweise aus Silizium, ist ein dotierter Bereich 5 ausgebildet. Eine Membran 2 befindet sich auf einer Abstandsschicht 7, in der ein Hohlraum 8 ausgebildet ist. Dieser Hohlraum bildet einen Zwischenraum zwischen dem dotierten Bereich 5 und der Membran 2 und kann z. B. dadurch hergestellt werden, daß durch in der Membran 2 hergestellte Ätzöffnungen 9 das Material der Abstandsschicht 7, die zunächst als Hilfsschicht oder Opferschicht hergestellt wird, ausgeätzt wird. Wenn diese Opferschicht aus Siliziumoxid z. B. durch lokale Oxidation der Siliziumoberfläche (LOCOS) hergestellt wird, ist als Ätzmittel HF in wäßriger Lösung geeignet; es kann auch Plasmaätzen angewendet werden. Die Ätzöffnungen 9 werden mit einer Verschlußschicht verschlossen. Die Herstellung vereinfacht sich dadurch, daß als solche Verschlußschicht die Planarisierungsschicht 11 verwendet wird, die auch für die Bedeckung der elektronischen Bauelemente verwendet wird. Vorzugsweise wird für die Planarisierungsschicht 11 BPSG (Borphosphorsilikatglas) verwendet, das bei thermischem Verfließen eine glatte Oberfläche liefert. In dem Substrat 1 sind als Beispiel in Figur 1 MOSFETs 13 als Bauelemente dargestellt, die als komplementäre MOSFETs im Rahmen des CMOS-Prozesses hergestellt werden können. Es ist daher möglich, den erfindungsgemäßen Ultraschallwandler vollständig zusammen mit allen für die Ansteuerelektronik erforderlichen Bauelementen zu integrieren.

Der elektrische Anschluß erfolgt durch vertikale leitende Verbindungen, die in der Planarisierungsschicht 11 vorhanden sind. Diese Leiter werden z. B. hergestellt, indem Kontaktlöcher geätzt werden und diese Kontaktlöcher mit geeignetem Metall aufgefüllt werden. Auf die Oberseite der Schicht 11 wird eine erste Metallisierungsebene, ggf. im selben Verfahrensschritt mit der Kontaktlochfüllung, aufgebracht und strukturiert. Es können dann weitere Zwischenoxidschichten 12 aufgebracht werden, um mehrere Metallisierungsebenen zu realisieren. Im vorliegenden Ausführungsbeispiel der Figur 1 ist die Membran aus dotiertem Polysilizium hergestellt, das z. B. zusammen mit den Polysilizumstreifen, die als Gate-Elektroden der Transistoren vorgesehen sind, aufgebracht werden kann. Dieses dotierte Polysilizium der Membran 2 ist mit einem Anschlußkontakt 4 versehen. Der dotierte Bereich 5 ist als Gegenelektrode zu der Membran mit einem Kontakt 6 versehen. Ein restlicher Anteil der Planarisierungsschicht 11 und darauf abgeschiedener weiterer Schichten ist bei diesem Ausführungsbeispiel auf der Membran 2 als Stempel 10 belassen worden. Mit diesem Stempel werden die Ätzöffnungen 9 verschlossen und gleichzeitig eine Versteifung der Membran 2 bewirkt. Die Dicke dieses Stempels kann je nach den betreffenden Anforderungen gewählt werden.

Die Dicke der im Betrieb des Wandlers als Membran fungierenden Schicht oder Schichtfolge (Membran 2 und ggf. weitere Schichten, z. B. der Stempel 10) beträgt bei bevorzugten Ausführungsbeispielen typisch etwa 0,5 µm bis 5 µm, was im einzelnen von der Verwendung einer zusätzlichen Versteifung der Membran, wie z. B. dem Stempel 10, abhängt. Die für den Schallwandler verwendeten Membranen können unterschiedliche Formen aufweisen (z. B. quadratisch, rechteckig, sechseckig, achteckig, rund). Typische Abmessungen liegen im Bereich von 20 bis 200 µm (größte Ausdehnung des für die Schallabstrahlung vorgesehenen Anteils der Membranschicht).

In Figur 2 ist ein Ausführungsbeispiel dargestellt, bei dem zusätzlich zu dem Substrat 1, der Membran 2, dem dotierten Bereich 5, dem darauf aufgebrachten Kontakt 6, der Abstandsschicht 7, dem Hohlraum 8, den Ätzöffnungen 9, der Planarisierungsschicht 11, und dem Zwischenoxid 12 eine Passivierungsschicht 14 auf der Oberseite, eine Deckschicht 15, die z. B. aus Aluminium bestehen kann, über der Membran und ein Anschlußkontakt 16, der die Membran 2 und die Deckschicht 15 miteinander leitend verbindet, eingezeichnet. Bei diesem Ausführungsbeispiel kann die Membran 2 sehr dünn hergestellt werden, wobei gleichzeitig eine ausreichende mechanische Stabilität und Steifigkeit der Membran durch die aufgebrachte Deckschicht 15 bewirkt ist. Die Deckschicht 15 kann direkt auf der Membran 2 aufgebracht sein oder, wie eingezeichnet, auf der unteren Planarisierungsschicht 11. Die Deckschicht 15 wird dann z. B. zusammen mit der ersten Metallage im Anschluß an die Kontaktlochfüllungen aufgebracht. Die Deckschicht kann also Bestandteil der ersten Metallisierungsebene, die für die Strukturierung von Leiterbahnen verwendet wird, sein. Wenn für den kapazitiven Betrieb des Wandlers der dotierte Bereich 5 und eine leitfähige Deckschicht 15 (z. B. aus Metall) verwendet werden, braucht die Membran 2 nicht elektrisch leitend zu sein, und der Kontakt 16 kann entfallen. Bei dem Ausführungsbeispiel der Figur 2 wird die Deckschicht aus Aluminium direkt an die erste Leiterbahnebene angeschlossen und der Kontakt 16 weggelassen.

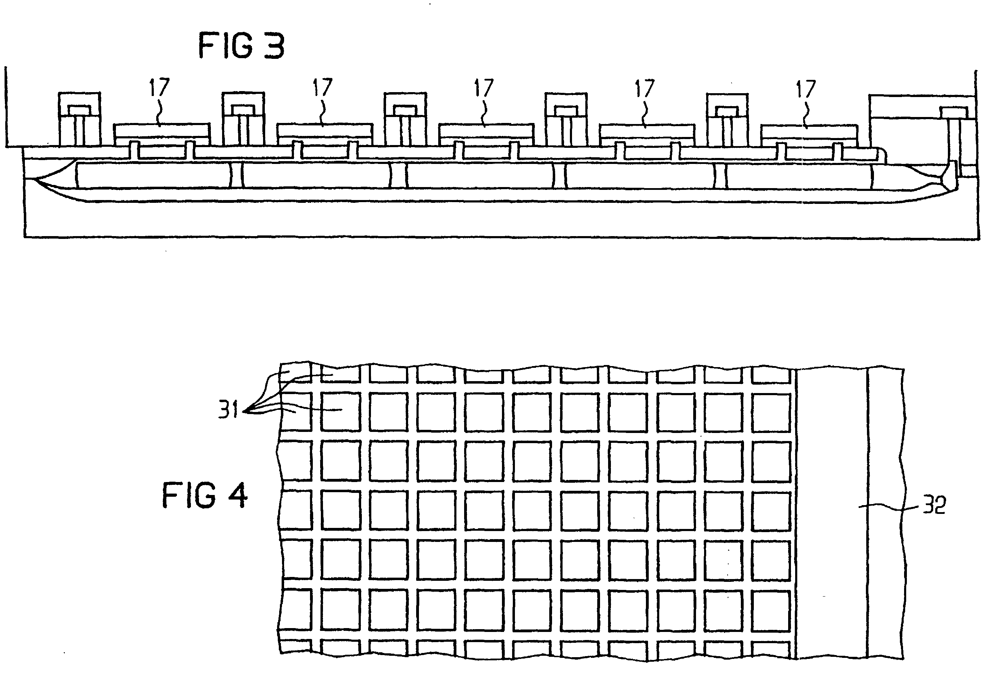

Die weitgehend miniaturisierte Ausführung und die vollständige Integration mit den elektronischen Komponenten ermöglicht es, den erfindungsgemäßen Ultraschallwandler als Einzelkomponente in einem Array, d. h. einer Anordnung einer Vielzahl solcher Einzelkomponenten, vorzusehen. Im Prinzip ist eine solche Anordnung im Querschnitt in Figur 3 dargestellt. Es sind dort mehrere Einzelwandler 17 im Schema im Querschnitt gezeichnet. Diese Wandler können z. B. in einem quadratischen Raster angeordnet sein, das in Figur 4 in Aufsicht im Ausschnitt dargestellt ist. Die Abstrahlflächen der Einzelwandler 31 sind dort quadratisch eingezeichnet. Die Abstrahlflächen der Membranen der Einzelwandler können statt dessen eine andere geometrische Form haben, z. B. eine der obengenannten geometrischen Formen. Eine besonders geeignete Ausführungsform des Arrays sieht ein hexagonales Raster und regelmäßige Sechsecke als Abstrahlflächen vor.

Die Abstrahlflächen müssen nicht alle gleich sein, sondern können unterschiedliche Formen und Größen aufweisen. Seitlich zu der rasterförmigen Anordnung befindet sich in dem dargestellten Beispiel ein Bereich 32, der für elektronische Komponenten vorgesehen ist. Es ist vorteilhaft, wenn auch in den Zwischenräumen zwischen den Einzelwandlern 31 elektronische Bauelemente angeordnet sind, um die elektrischen Verbindungen zwischen den Einzelwandlern und den elektronischen Bauelementen zu verkürzen und zu vereinfachen. Die Anordnung als Raster braucht insbesondere nicht periodisch zu sein, es braucht also nicht an jedem Punkt des Rasters ein Einzelwandler vorhanden zu sein. Eine Anordnung, die aus einer Vielzahl von Einzelwandlern besteht und die keinerlei Periodizität aufweist, kann für bestimmte Anwendungen vorteilhaft sein.

Bei einem Array können die Wandler z. B. über eine mit der elektronischen Schaltung integrierte Multiplexeranordnung einzeln oder in Gruppen zu einem oder mehreren Eingängen bzw. Ausgängen der Ansteuerschaltung zuschaltbar sein. Eine solche alternierende Verbindung wird am besten durch elektronische Schalter, die z. B. durch komplementäre MOSFETs gebildet sind, realisiert.

Der Betrieb eines solchen Arrays kann auf sehr verschiedene Weise und für verschiedene Anwendungszwecke unterschiedlich erfolgen. Wenn alle Einzelwandler simultan betrieben werden, zu welchem Zweck die Einzelkomponenten über die Leiterbahnebenen fest elektrisch miteinander verbunden sein können, erhält man einen Ultraschallwandler, der bei vergrößerter Abstrahlfläche und Abstrahlleistung die Vorzüge der mikromechanisch hergestellten Einzelwandler aufweist. Statt dessen können durch Ansteuern jeweils einer Anzahl von aufeinanderfolgenden Zeilen und Spalten des Rasters der Anordnung jeweils die einer Untergruppe vorgegebener Größe zugehörigen Einzelwandler aktiviert werden. Es können z. B. bei dem quadratischen Raster jeweils in beiden Richtungen aufeinanderfolgende Einzelwandler in bestimmter Anzahl aktiviert werden (z. B. quadratische Teil-Arrays von 3x3 oder 10x10 Einzelwandlern). Diese Teil-Arrays können in einem übergeordneten Raster fest eingestellt sein, oder die Auswahl der Teil-Arrays erfolgt gleitend, indem an einer Seite der ausgewählten Untergruppe von Einzelwandlern die Wandler deaktiviert, also abgeschaltet werden und auf der anderen Seite eine Zeile oder Spalte von Einzelwandlern zugeschaltet wird. Entsprechendes gilt für eine andere Rasterform oder allgemein eine andere Anordnung der Einzelwandler.

Zusätzliche Vorteile bieten pseudo-zufällige Wandleranordnungen, sogenannte Random-Arrays. Hiermit können unter Einsatz vergleichsweise weniger Einzelwandler Richtdiagramme erzeugt werden, die ein ausgeprägtes Hauptmaximum und sehr niedrige Nebenmaxima aufweisen. Eine solche Wandleranordnung erhält man z. B. dadurch, daß die Wandler in einem Raster angeordnet werden und dabei einzelne Rasterpunkte, die nach pseudo-zufälligen Auswahlkriterien bestimmt werden, ausgelassen werden. In den Lücken in der Besetzung des Rasters können dann elektronische Bauelemente angeordnet sein. Eine unregelmäßige Verteilung der Einzelwandler kann auch dazu genutzt werden, Einzelwandler mit unterschiedlicher Größe und Form der Abstrahlflächen vorzusehen.

Durch die mechanische und/oder elektrische Ausgestaltung-z. B. durch geeignete Wahl von Parametern wie der Dicke und Steifigkeit der Membran und der Größe und Form der Abstrahlflächen - können erfindungsgemäße Wandler unterschiedlicher Resonanzfrequenzen realisiert werden. Es können insbesondere die Resonanzfrequenzen der Wandler eines Arrays untereinander verschieden sein. Eine stochastische Verteilung der Einzelwandler unterschiedlicher Resonanzfrequenzen auf einem Raster, auf einem unterbrochenen Raster (Random-Array) oder in völlig unperiodischer Anordnung liefert ein Array mit wesentlich größerer Bandbreite, wie sie insbesondere bei Abstrahlung in Luft erwünscht sein kann.

Ein Ausführungsbeispiel eines erfindungsgemäßen Arrays kann z. B. vorsehen, eine quadratische Anordnung aus 100x100 Arrays in 10x10 quadratische Anordnungen aus jeweils 10x10 Einzelwandlern zu unterteilen. Diese Teil-Arrays aus jeweils 100 Einzelwandlern können dann unabhängig voneinander simultan aktiviert werden, oder es ist möglich, in jedem dieser Teil-Arrays eine gleitende Ansteuerung von z. B. jeweils 4 im Quadrat angeordneten Einzelwandlern vorzunehmen. Statt dessen kann auf eine feste Einteilung des Rasters verzichtet werden. Für bestimmte Anwendungen kann es vorteilhaft sein, wenn ein Teilraster aus z. B. jeweils 100 im Quadrat angeordneten Einzelwandlern aktiviert wird, wobei dann jeweils eine äußere Zeile oder Spalte dieses Arrays abgeschaltet und dafür an der anderen Seite eine weitere Zeile oder Spalte aus 10 Einzelwandlern dem Teil-Array zugeschaltet werden. Auf diese Weise kann die räumliche Abstrahlung des gesamten Arrays gesteuert werden. Die Hauptabstrahlrichtung befindet sich jeweils senkrecht über der Ebene der Anordnung. Bei dem quadratischen Raster befindet sich das Maximum des Schalldruckes bei Abstrahlung etwa über der Mitte des betreffenden Teil-Arrays. Eine gleitende Ansteuerung des Arrays läßt daher das Maximum des abgestrahlten Schalldruckes ("Sendekeule") räumlich wandern.

Mit einer zeilenweisen und spaltenweisen Ansteuerung von Einzelwandlern oder kleinen Untergruppen von Einzelwandlern lassen sich praktisch alle Anwendungen von an sich bekannten Phased-Arrays realisieren. Das Prinzip des Phased-Array basiert darauf, daß mehrere Ultraschallwandler mit Signalen angeregt werden, die in ihrer Phasenlage bzw. in ihrer zeitlichen Lage und/oder in ihrer Amplitude gesteuert werden. Eine Vielzahl von Wandlern wird gleichzeitig betrieben, die anliegenden Signale sind aber z. B. in einer Richtung der Anordnung um eine bestimmte Phasendifferenz gegeneinander verschoben. Hierdurch kann der Schallstrahl bei Sendebetrieb geschwenkt werden, können definierte Richtdiagramme erzeugt werden, und es kann der Strahl auf bestimmte Raumpunkte fokussiert werden. Dieselben Möglichkeiten können auch rechnerisch durch Überlagerung der Empfangssignale realisiert werden. Damit ist sowohl eine Richtwirkung bei Sendebetrieb als auch eine Detektion der Richtung, aus der eine Schallwelle auftrifft, bei Empfang möglich. Eine geeignete Auswerteschaltung läßt daher die Bestimmung aller derjenigen Informationen zu, die bei Ultraschallempfang mit einem derartigen Array detektiert werden können.

Die Ansteuerung einer als Phased-Array betriebenen Wandler-Anordnung kann analog oder digital durch ein Schieberegister, das z. B. sehr zweckmäßig in dem in Figur 4 eingezeichneten, an das eigentliche Array seitlich angrenzenden Bereich 32 angeordnet sein kann, realisiert werden. Bei Verwendung eines Schieberegisters für Sendebetrieb wird das Sendesignal an den Eingang des Schieberegisters angelegt. Die Ausgänge der Schieberegisterzellen werden auf Zeilen oder Spalten von Wandlern in dem Array geführt. Durch Änderung der Taktfrequenz im Schieberegister kann die Phasendifferenz zwischen den jeweils gemeinsam adressierten Wandlern und somit der Abstrahlwinkel im Raum variiert werden. Bei einem Array mit rotationssymmetrischer Anordnung der Einzelwandler können die auf konzentrischen Ringen um das Symmetriezentrum der Anordnung liegenden Einzelwandler gleichphasig betrieben werden; die Wandler auf weiter außen liegenden Ringen laufen vor, um die größere Weglänge der Signale zu einem Punkt über dem Mittelpunkt der Anordnung auszugleichen. Damit ist auch die Entfernung des Fokus des abgestrahlten Ultraschalls einstellbar.

Eine weitere Verbesserung des erfindungsgemäßen Ultraschallwandlers sieht eine verbesserte Betriebsschaltung vor. In denjenigen Fällen, in denen die Höhe des Hohlraumes 8 unter der Membran 2 (s. Figur 1) nicht ausreichend gering hergestellt werden kann, ist eine relativ hohe Gleichspannung als Vorspannung zwischen Membran und dotiertem Bereich 5 erforderlich. Eine solche Vorspannung erhöht die Empfindlichkeit des Wandlers. Vorzugsweise wird eine solche Vorspannung im Bereich von 10 Volt bis 200 Volt gewählt. Ein typischer Wert bei einer Membranabmessung von 50 µm bis 100 µm ist 100 Volt. Die Empfindlichkeit des Wandlers hängt von verschiedenen Parametern ab. Die Dicke und Steifigkeit der Membran sind wesentlich, ebenso wie die Abmessungen der Abstrahlfläche. Ein in dem Hohlraum 8 eingeschlossenes Gas versteift die Membran. Wenn Ultraschall in Luft abgestrahlt werden soll, ist eine Membrangröße mit 100 µm bis 200 µm als größte Abmessung der Abstrahlfläche bevorzugt. Je größer die Höhe des Hohlraumes 8 ist, um so größer muß der Wert der Vorspannung gewählt werden, um einen rauschfreien Betrieb des Wandlers zu ermöglichen. Wegen der hohen erforderlichen Gleichspannung ist ein Schutz der elektronischen Komponenten der Ansteuerschaltung erforderlich.

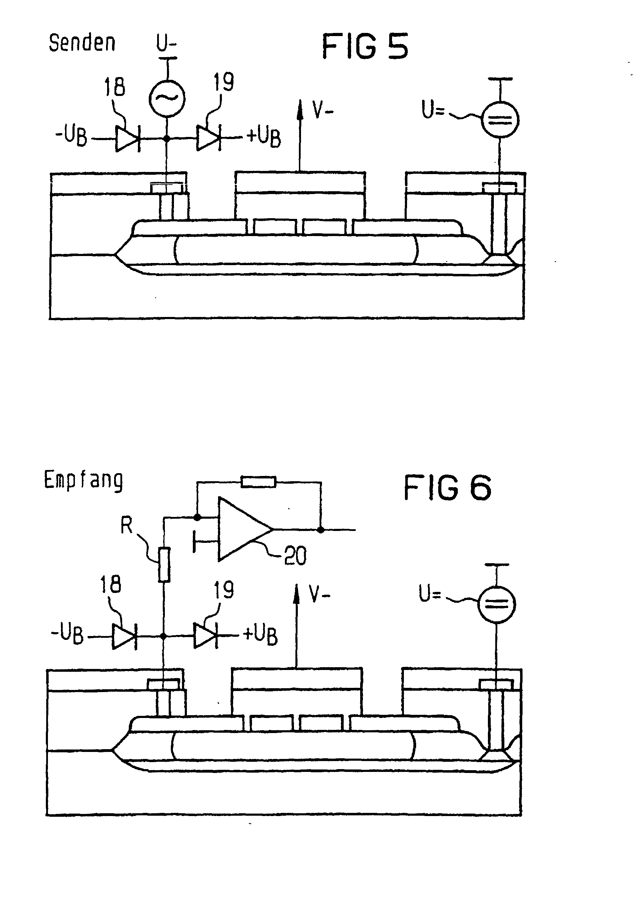

In den Figuren 5 und 6 sind solche speziellen Schaltungen für Sendebetrieb und Empfangsbetrieb des Wandlers dargestellt. Eine Gleichspannung U₌ wird zwischen die Anschlüsse der Membran (bzw. der leitfähigen Deckschicht) und des dotierten Bereiches als Vorspannung angelegt. Sowohl im Sende- als auch im Empfangsbetrieb verbessert sich die Empfindlichkeit des Wandlers mit Erhöhung der elektrischen Feldstärke zwischen den Kondensatorelektroden (zwischen der Membran und dem dotierten Bereich in der beschriebenen Ausführungsform). Die Größe der maximal zulässigen Feldstärke wird durch die physikalischen Eigenschaften der verwendeten Materialien oder die erlaubte maximale Auslenkung begrenzt. Zweck der Vorspannung ist die Erzielung eines möglichst großen elektromechanischen Kopplungsfaktors und damit einer möglichst hohen Empfindlichkeit des Wandlers. Der Kopplungsfaktor erreicht dann seinen größten Wert eins, wenn die Membran durch die Vorspannung bis zu dem durch den nichtlinearen elektrostatischen Effekt bedingten labilen Punkt hin ausgelenkt wird. Der maximale Wert der durch eine Vorspannung bedingten Auslenkung liegt im Fall einer koplanaren Auslenkung der Membran (Plattenkondensator mit variablem Plattenabstand) bei 33% und bei den Membranen des erfindungsgemäßen Wandlers, die beim Auslenken gewölbt werden, entsprechend darüber. Gute Wirkungsgrade bei stabilem Arbeitsverhalten im Betrieb ergeben sich bei vorspannungsbedingten statischen Auslenkungen von 1% bis 20%.

Die für den Sendebetrieb vorgesehene Wechselspannung U₋ wird an einen der beiden Anschlüsse, im Beispiel der Figur 5 den Anschluß der Membran, angelegt. Über Dioden 18, 19 ist dieser Anschluß mit den Betriebspotentialen -U_{B} und +U_{B} der elektronischen Schaltung verbunden. Eventuell dort anliegende Potentiale, die z. B. durch Ladungsträgerinfluenz als Folge von Auf- und Abbau der hohen Gleichspannung U₌ dort aufgebaut werden, werden so zu einem der Betriebspotentiale hin kurzgeschlossen. Die Gleichspannung U₌ wird so hoch gewählt, daß eine vorgesehene Amplitude der Wechselspannung U₋ mindestens eine vorgesehene Amplitude der Membranschwingung bewirkt.

Figur 6 zeigt eine entsprechende Schaltung für Empfangsbetrieb. Die anzuschließende Wechselspannung ist dort durch eine geeignete Transistor-Vorverstärkerschaltung ersetzt, die in Figur 6 durch eine Operationsverstärkerschaltung 20 symbolisiert ist. Zur Erzielung einer möglichst hohen Empfindlichkeit und zur Eliminierung des Einflusses von schaltungstechnisch bedingten oder parasitären Kapazitäten ist die Schaltung eingangsseitig möglichst niederohmig als Stromverstärker ausgelegt. Zur Erhöhung der Bandbreite kann es aber auch zweckmäßig sein, den Eingangswiderstand R der Schaltung in Verbindung mit dem Wert der Gleichspannung U₌ so einzustellen, daß die Bedämpfung der mechanischen Komponente optimal erfolgt. Die Gleichspannung für Empfangsbetrieb liegt vorzugsweise auch zwischen 10 Volt und 200 Volt. Die Gleichspannung wird so hoch gewählt, daß eine vorgegebene maximale Auslenkung der Membran mindestens eine vorgesehene Änderung des Wertes dieser Gleichspannung und/oder einen hervorgerufenen elektrischen Strom mit mindestens einer vorgesehenen Stromstärke bewirkt.

## Patentansprüche

1. Ultraschallwandler auf einem Substrat (1),
- bei dem in dem Substrat ein dotierter Bereich (5) ausgebildet ist,
- bei dem auf einer Abstandsschicht (7) im Abstand zu diesem Bereich eine mikromechanische Membran (2) angeordnet ist,
- bei dem zwischen dem dotierten Bereich und der Membran ein Hohlraum (8) vorhanden ist, der eine vorgesehene maximale Auslenkung der Membran zum Substrat hin ermöglicht,
- bei dem die Membran elektrisch leitend ist oder mit einer im Bereich der Membranfläche angeordneten elektrisch leitenden Schicht (15) mechanisch verbunden ist,
- bei dem die Membran oder die damit verbundene elektrisch leitende Schicht und der dotierte Bereich mit je einem Anschlußkontakt (4, 6) versehen sind,
- bei dem elektronische Bauelemente auf dem Substrat integriert sind und
- bei dem diese Bauelemente so miteinander und mit den Anschlußkontakten verbunden sind, daß eine Ansteuerschaltung gebildet ist, mit der es möglich ist, die Membran zu Ultraschallschwingungen anzuregen oder vorhandene Ultraschallschwingungen der Membran zu detektieren.

2. Ultraschallwandler nach Anspruch 1,
bei dem die Membran Silizium oder Polysilizium ist oder einen Schichtanteil aus Silizium oder Polysilizium besitzt.

3. Ultraschallwandler nach Anspruch 1 oder 2,
bei dem die Membran zumindest auf einer für den Betrieb des Ultraschallwandlers vorgesehenen Fläche mit einer Deckschicht (15) aus einem von Silizium verschiedenen Material versehen ist.

4. Ultraschallwandler nach einem der Ansprüche 1 bis 3,
bei dem ein stempelartiger Aufsatz (10) in einem mittleren Anteil der für den Betrieb des Ultraschallwandlers vorgesehenen Fläche der Membran vorhanden ist.

5. Ultraschallwandler nach einem der Ansprüche 1 bis 4,
bei dem als elektronische Bauelemente komplementäre MOSFETs oder/und Bipolartransistoren vorhanden sind.

6. Ultraschallwandler nach einem der Ansprüche 1 bis 5,
bei dem die Ansteuerschaltung für Sendebetrieb konzipiert und dafür vorgesehen ist, an die Anschlußkontakte (4, 6) eine Gleichspannung (U₌) und eine für die Anregung einer Ultraschallschwingung vorgesehene Wechselspannung (U₋) anzulegen, und
bei dem die Gleichspannung (U₌) so hoch gewählt wird, daß eine vorgesehene Amplitude der Wechselspannung (U₋) mindestens eine vorgesehene Amplitude der Membranschwingung bewirkt.

7. Ultraschallwandler nach einem der Ansprüche 1 bis 5,
bei dem die Ansteuerschaltung für Empfangsbetrieb konzipiert und dafür vorgesehen ist, an die Anschlußkontakte (4, 6) eine Gleichspannung (U₌) anzulegen, die so hoch gewählt wird, daß eine vorgegebene maximale Auslenkung der Membran mindestens eine vorgesehene Änderung des Wertes dieser Gleichspannung und/oder einen hervorgerufenen elektrischen Strom mit mindestens einer vorgesehenen Stromstärke bewirkt, und
bei dem ein Anschlußkontakt (4) mit einem als Verstärker (20) vorgesehenen Teil der Ansteuerschaltung verbunden ist.

8. Ultraschallwandler nach Anspruch 7,
bei dem der Eingangswiderstand (R) des Verstärkers (20) so eingestellt ist, daß damit eine vorgesehene Bandbreite des Empfängers bewirkt ist.

9. Ultraschallwandler nach einem der Ansprüche 1 bis 8,
bei dem ein Anschlußkontakt über Dioden (18, 19) derart mit Betriebspotentialen einer Versorgungsspannung verbunden ist, daß ein an diesem Anschlußkontakt anliegendes Potential, das außerhalb des von diesen Betriebspotentialen begrenzten Intervalles liegt, zu einem der Betriebspotentiale hin kurzgeschlossen wird.

10. Ultraschallwandler nach einem der Ansprüche 1 bis 9,
bei dem die Ansteuerschaltung für alternativen Sende- und Empfangsbetrieb als Multiplexer konzipiert ist und
bei dem ein Schalter als Bestandteil der Ansteuerschaltung vorhanden ist, der eine Umschaltung zwischen Sende- und Empfangsbetrieb ermöglicht.

11. Anordnung mehrerer Ultraschallwandler nach einem der Ansprüche 1 bis 10 auf demselben Substrat,
bei der die Ansteuerschaltungen dafür eingerichtet sind, die Ultraschallwandler miteinander koordiniert auf Sende- bzw. Empfangsbetrieb zu schalten.

12. Anordnung nach Anspruch 11,
bei der die Ansteuerschaltungen dafür eingerichtet sind, die Ultraschallwandler in einer vorgegebenen zeitlichen Reihenfolge einzeln oder in Gruppen auf Betrieb zu schalten oder abzuschalten.

13. Anordnung nach Anspruch 11 oder 12,
bei der die Gesamtheit der vorhandenen Ultraschallwandler fest in Gruppen von Ultraschallwandlern eingeteilt ist und
bei der die Ansteuerschaltungen dafür eingerichtet sind, die Ultraschallwandler jeder Gruppe simultan auf Betrieb zu schalten oder abzuschalten.

14. Anordnung nach Anspruch 11 oder 12,
bei der die Ansteuerschaltungen dafür eingerichtet sind, eine zeitlich variierende Gruppe aus der Gesamtheit der Ultraschallwandler auf Betrieb zu schalten,
wobei diese Gruppe in der Weise variiert wird, daß in vorgegebenen Zeitabständen ein Anteil der auf Betrieb geschalteten Ultraschallwandler abgeschaltet wird und eine Anzahl weiterer Ultraschallwandler auf Betrieb geschaltet wird.

15. Anordnung nach Anspruch 11,
bei der die Ansteuerschaltungen dafür eingerichtet sind, die Ultraschallwandler derart im Sendebetrieb zu betreiben, daß durch die relativen Phasen oder zeitlichen Abfolgen der den einzelnen Ultraschallwandlern zugeführten Signale eine Richtwirkung des abgestrahlten Ultraschalls bewirkt wird.

16. Anordnung nach Anspruch 11,
bei der die Ansteuerschaltungen dafür eingerichtet sind, die Ultraschallwandler derart im Empfangsbetrieb zu betreiben, daß durch eine rechnerische Überlagerung der relativen Phasen oder zeitlichen Abfolgen der von den einzelnen Ultraschallwandlern empfangenen Signale eine Richtungserkennung des empfangenen Ultraschalls bewirkt wird.

17. Anordnung nach Anspruch 15 oder 16,
bei der die Ansteuerschaltungen mindestens ein Schieberegister umfassen.

18. Anordnung nach einem der Ansprüche 11 bis 17,
bei der die Ultraschallwandler in einem zumindest in einer Richtung periodischen ebenen Raster und dieses Raster füllend angeordnet sind.

19. Anordnung nach Anspruch 13 oder 14,
bei der die Ultraschallwandler in einem zumindest in einer Richtung periodischen ebenen Raster angeordnet sind und
bei der die Gruppen von Ultraschallwandlern, die jeweils gemeinsam auf Betrieb geschaltet werden, einen jeweiligen Ausschnitt aus dem Raster füllen.

20. Anordnung nach einem der Ansprüche 11 bis 17,
bei der die Ultraschallwandler in Quadraten oder regelmäßigen Sechsecken, die eine lückenlose Parkettierung der Ebene bilden, angeordnet sind und
bei der die für den Betrieb der Ultraschallwandler vorgesehenen Flächen der Membranen jeweils Quadrate bzw. Sechsecke sind.

21. Anordnung nach einem der Ansprüche 11 bis 17,
bei der die Ultraschallwandler so angeordnet sind, daß in jeder Richtung eine Periodizität der Anordnung vermieden ist.

## Claims

1. Ultrasonic transducer on a substrate (1),
- in which a doped region (5) is formed in the substrate,
- in which a micromechanical diaphragm (2) is arranged on a spacer layer (7) at a distance from the said region,
- in which a cavity (8) is present between the doped region and the diaphragm, which cavity enables an envisaged maximum deflection of the diaphragm towards the substrate,
- in which the diaphragm is electrically conductive or is mechanically connected to an electrically conductive layer (15) arranged in the region of the diaphragm area,
- in which the diaphragm or the electrically conductive layer connected thereto and the doped region are provided with a respective terminal contact (4, 6),
- in which electronic components are integrated on the substrate, and
- in which the said components are connected to one another and to the terminal contacts in such a way as to form a drive circuit which makes it possible to excite the diaphragm to effect ultrasonic oscillations, or to detect ultrasonic oscillations of the diaphragm that are present.

2. Ultrasonic transducer according to Claim 1,
in which the diaphragm is silicon or polysilicon or has a layer portion made of silicon or polysilicon.

3. Ultrasonic transducer according to Claim 1 or 2,
in which the diaphragm, at least on an area provided for the operation of the ultrasonic transducer, is provided with a covering layer (15) made of a different material from silicon.

4. Ultrasonic transducer according to one of Claims 1 to 3,
in which a plunger-like attachment (10) is present in a central portion of the diaphragm area provided for the operation of the ultrasonic transducer.

5. Ultrasonic transducer according to one of Claims 1 to 4,
in which complementary MOSFETs and/or bipolar transistors are present as electronic components.

6. Ultrasonic transducer according to one of Claims 1 to 5,
in which the drive circuit is designed for transmission operation and is provided for applying to the terminal contacts (4, 6) a DC voltage (U₌) and an AC voltage (U₋) provided for the excitation of an ultrasonic oscillation, and
in which the DC voltage (U₌) is chosen to be high enough that an envisaged amplitude of the AC voltage (U₋) at least effects an envisaged amplitude of the diaphragm oscillation.

7. Ultrasonic transducer according to one of Claims 1 to 5,
in which the drive circuit is designed for reception operation and is provided for applying to the terminal contacts (4, 6) a DC voltage (U₌) which is chosen to be high enough that a predetermined maximum deflection of the diaphragm at least effects an envisaged change in the value of the said DC voltage and/or an electric current brought about with at least an envisaged current intensity, and
in which a terminal contact (4) is connected to a part of the drive circuit that is provided as an amplifier (20).

8. Ultrasonic transducer according to Claim 7,
in which the input resistor (R) of the amplifier (20) is set such that an envisaged bandwidth of the receiver is effected therewith.

9. Ultrasonic transducer according to one of Claims 1 to 8,
in which a terminal contact is connected via diodes (18, 19) to operating potentials of a supply voltage in such a way that a potential which is present at the said terminal contact and lies outside the interval delimited by the said operating potentials is shortcircuited towards one of the operating potentials.

10. Ultrasonic transducer according to one of Claims 1 to 9,
in which the drive circuit is designed for alternative transmission and reception operation as a multiplexer, and
in which a switch is present as a constitute part of the drive circuit, which switch enables a changeover between transmission and reception operation.

11. Arrangement of a plurality of ultrasonic transducers according to one of Claims 1 to 10 on the same substrate,
in which the drive circuits are set up to the effect that the ultrasonic transducers are switched to transmission or reception operation in a manner coordinated with one another.

12. Arrangement according to Claim 11,
in which the drive circuits are set up to the effect that the ultrasonic transducers are switched to operation, or switched off, in a predetermined temporal order individually or in groups.

13. Arrangement according to Claim 11 or 12,
in which the totality of the ultrasonic transducers present is fixedly divided into groups of ultrasonic transducers, and
in which the drive circuits are set up to the effect that the ultrasonic transducers of each group are simultaneously switched to operation or switched off.

14. Arrangement according to Claim 11 or 12,
in which the drive circuits are set up to the effect that a temporally varying group from the totality of the ultrasonic transducers is switched to operation,
the said group being varied in such a way that, at predetermined time intervals, a portion of the ultrasonic transducers that have been switched to operation are switched off and a number of further ultrasonic transducers are switched to operation.

15. Arrangement according to Claim 11,
in which the drive circuits are set up to the effect that the ultrasonic transducers are operated in transmission operation in such a way that a directional effect of the radiated ultrasound is effected by the relative phases or temporal sequences of the signals fed to the individual ultrasonic transducers.

16. Arrangement according to Claim 11,
in which the drive circuits are set up to the effect that the ultrasonic transducers are operated in reception operation in such a way that an identification of the direction of the received ultrasound is effected by a computational superposition of the relative phases or temporal sequences of the signals received by the individual ultrasonic transducers.

17. Arrangement according to Claim 15 or 16,
in which the drive circuits comprise at least one shift register.

18. Arrangement according to one of Claims 11 to 17,
in which the ultrasonic transducers are arranged in a planar grid, which is periodic at least in one direction, and in a manner filling the said grid.

19. Arrangement according to Claim 13 or 14,
in which the ultrasonic transducers are arranged in a planar grid which is periodic at least in one direction, and
in which the groups of ultrasonic transducers which are in each case jointly switched to operation fill a respective excerpt from the grid.

20. Arrangement according to one of Claims 11 to 17,
in which the ultrasonic transducers are arranged in squares or regular hexagons which form a gap-free parquetting of the plane, and
in which the areas of the diaphragms which are provided for the operation of the ultrasonic transducers are in each case squares or hexagons.

21. Arrangement according to one of Claims 11 to 17,
in which the ultrasonic transducers are arranged such that a periodicity of the arrangement is avoided in each direction.

## Revendications

1. Transducteur à ultrasons sur un substrat (1),
- dans lequel il est formé dans le substrat une zone (5) dopée,
- dans lequel il est disposé une membrane (2) micromécanique sur une couche (7) intercalaire à distance de cette zone,
- dans lequel il y a, entre la zone dopée et la membrane, une cavité (8) qui permet une excursion maximum prévue de la membrane par rapport au substrat,
- dans lequel la membrane est conductrice de l'électricité ou est reliée mécaniquement à une couche (15) conductrice de l'électricité disposée dans la zone de la surface de la membrane,
- dans lequel la membrane ou la couche conductrice de l'électricité qui y est reliée et la zone dopée sont munies respectivement chacune d'un contact (4, 6) formant borne,
- dans lequel des composants électroniques sont intégrés sur le substrat et
- dans lequel ces composants sont reliés entre eux et aux contacts formant bornes de façon à former un circuit de commande par lequel il est possible d'exciter la membrane pour qu'elle effectue des oscillations d'ultrasons ou de détecter des oscillations d'ultrasons de la membrane qui sont présentes.

2. Transducteur à ultrasons suivant la revendication 1, dans lequel la membrane est en silicium ou en polysilicium ou a une proportion de couche en silicium ou en polysilicium.

3. Transducteur à ultrasons suivant la revendication 1 ou 2, dans lequel la membrane est munie, au moins sur l'une des faces prévues pour le fonctionnement du transducteur à ultrasons, d'une couche (15) de finition en un matériau autre que du silicium.

4. Transducteur à ultrasons suivant l'une des revendications 1 à 3, dans lequel il y a un couronnement (10) en forme de poinçon dans une partie médiane de la surface de la membrane qui est prévue pour le fonctionnement du transducteur à ultrasons.

5. Transducteur à ultrasons suivant l'une des revendications 1 à 4, dans lequel il est prévu, comme composants électroniques, des MOSFET complémentaires ou/et des transistors bipolaires.

6. Transducteur à ultrasons suivant l'une des revendications 1 à 5, dans lequel le circuit de commande est conçu pour le fonctionnement en émission et il est prévu, à cet effet, d'appliquer aux contacts (4, 6) formant borne une tension (U₌) continue et une tension (U_{∼}) alternative prévue pour l'excitation d'une oscillation ultrasonore et
dans lequel la tension (U₌) continue est choisie si haute qu'une amplitude prévue de la tension (U_{∼}) alternative provoque au moins une amplitude prévue de l'oscillation de la membrane.

7. Transducteur à ultrasons suivant l'une des revendications 1 à 5, dans lequel le circuit de commande est conçu pour un fonctionnement en réception et il est prévu à cet effet d'appliquer aux contacts (4, 6) formant borne une tension (U₌) continue qui est choisie si haut qu'une excursion maximum donnée à l'avance de la membrane provoque au moins une modification prévue de la valeur de cette tension continue et/ou un courant électrique provoqué ayant au moins une intensité de courant prévue et
dans lequel un contact (4) formant borne est relié à une partie prévue comme amplificateur (20) du circuit de commande.

8. Transducteur à ultrasons suivant la revendication 7, dans lequel la résistance (R) d'entrée de l'amplificateur (20) est réglée de façon à donner une largeur de bande prévue du récepteur.

9. Transducteur à ultrasons suivant l'une des revendications 1 à 8, dans lequel un contact formant borne est relié par des diodes (18, 19) à des potentiels de fonctionnement d'une tension d'alimentation, de façon qu'un potentiel appliqué à ce contact formant borne, qui se trouve en dehors de l'intervalle délimité par ces potentiels de fonctionnement, soit court-circuité vers l'un des potentiels de fonctionnement.

10. Transducteur à ultrasons suivant l'une des revendications 1 à 9, dans lequel le circuit de commande est conçu pour un fonctionnement en alternance en émission et en réception en tant que multiplexeur et
dans lequel un interrupteur fait partie du circuit de commande et permet une commutation entre le fonctionnement en émission et le fonctionnement en réception.

11. Agencement de plusieurs transducteurs à ultrasons suivant l'une des revendications 1 à 10 sur le même substrat,
dans lequel les circuits de commande sont établis de façon à brancher les transducteurs à ultrasons entre eux de manière coordonnée en fonctionnement en émission et en fonctionnement en réception.

12. Agencement suivant la revendication 11, dans lequel les circuits de commande sont établis de manière à mettre en fonctionnement ou hors de fonctionnement les transducteurs à ultrasons individuellement ou en groupe suivant une succession dans le temps qui peut être donné à l'avance.

13. Agencement suivant la revendication 11 ou 12, dans lequel l'ensemble des transducteurs à ultrasons présents est réparti d'une manière fixe en groupes de transducteurs à ultrasons et
dans lequel les circuits de commande sont établis de façon à mettre en fonctionnement ou hors de fonctionnement simultanément les transducteurs à ultrasons de chaque groupe.

14. Agencement suivant la revendication 11 ou 12,
dans lequel les circuits de commande sont établis de manière à mettre en fonctionnement un groupe variable dans le temps parmi la totalité des transducteurs à ultrasons, ces groupes pouvant être modifiés de manière à mettre hors de fonctionnement à des intervalles de temps donnés à l'avance une proportion des transducteurs à ultrasons mis en fonctionnement et à mettre en fonctionnement un certain nombre d'autres transducteurs à ultrasons.

15. Agencement suivant la revendication 11,
dans lequel les circuits de commande sont établis pour faire fonctionner les transducteurs à ultrasons en émission de façon à ce que, par les phases relatives ou les successions dans le temps des signaux à envoyer aux divers transducteurs à ultrasons, il est provoqué un effet directif de l'ultrason émis.

16. Agencement suivant la revendication 11,
dans lequel les circuits de commande sont établis pour faire fonctionner les ultrasons en mode de réception de façon à ce que, par une superposition par le calcul des phases relatives ou des successions dans le temps des signaux reçus par divers transducteurs à ultrasons, il est provoqué une reconnaissance de la direction de l'ultrason reçu.

17. Agencement suivant la revendication 15 ou 16,
dans lequel les circuits de commande comprennent au moins un registre à décalage.

18. Agencement suivant l'une des revendications 11 à 17,
dans lequel les transducteurs à ultrasons sont disposés dans une trame plane périodique au moins dans une direction et emplissent cette trame.

19. Agencement suivant l'une des revendications 13 à 14,
dans lequel les transducteurs à ultrasons sont disposés dans une trame plane périodique au moins dans une direction et
dans lequel les groupes de transducteurs à ultrasons qui sont mis respectivement en fonctionnement en commun emplissent une partie respective de la trame.

20. Agencement suivant l'une des revendications 11 à 17,
dans lequel les transducteurs à ultrasons sont disposés suivant des carrés ou des hexagones réguliers qui forment un parquetage sans discontinuité du plan et
dans lequel les surfaces des membranes qui sont prévues pour le fonctionnement des transducteurs à ultrasons sont respectivement des carrés ou des hexagones.

21. Agencement suivant l'une des revendications 11 à 17,
dans lequel les transducteurs à ultrasons sont disposés de manière à éviter dans chaque direction une périodicité de l'agencement.
